Europäisches Patentamt

European Patent Office

Office européen des brevets

(19)

(11) Publication number: **0 043 203**
**B1**

(12) # EUROPEAN PATENT SPECIFICATION

(45) Date of publication of patent specification: **18.12.85**

(51) Int. Cl.⁴: **A 01 G 25/09, F 16 L 1/00**

(21) Application number: **81302696.0**

(22) Date of filing: **16.06.81**

(54) **Liquid conveying hose, especially for agricultural purposes.**

(30) Priority: **30.06.80 HU 161580**

(43) Date of publication of application:
**06.01.82 Bulletin 82/01**

(45) Publication of the grant of the patent:
**18.12.85 Bulletin 85/51**

(84) Designated Contracting States:
**AT BE CH DE FR GB IT LI NL SE**

(56) References cited:
**DE-A-2 355 724**
**DE-B-2 248 201**
**FR-A-2 386 252**
**GB-A-1 416 674**
**GB-A-1 416 675**
**HU-A- 165 867**
**US-A-3 175 769**

(73) Proprietor: **Wutka, Ignac**
**Vorosfeny ut 76**
**H-1182 Budapest (HU)**

(73) Proprietor: **Schalk, Vilmos**
**Leanyka ut 32**
**H-1221 Budapest (HU)**

(73) Proprietor: **Forgacs, Csaba**
**Haros ut 139/c**
**H-1222 Budapest (HU)**

(73) Proprietor: **Bukovinszky, Ivan**
**Mernik ut 37/d**
**H-1119 Budapest (HU)**

(72) Inventor: **Wutka, Ignac**
**Vorosfeny ut 76**
**H-1182 Budapest (HU)**
Inventor: **Schalk, Vilmos**
**Leanyka ut 32**
**H-1221 Budapest (HU)**
Inventor: **Forgacs, Csaba**
**Haros ut 139/c**
**H-1222 Budapest (HU)**
Inventor: **Bukovinszky, Ivan**
**Mernik ut 37/d**
**H-1119 Budapest (HU)**

(74) Representative: **Gold, Tibor Zoltán et al**
**T.Z.GOLD & COMPANY 9, Staple Inn**
**London WC1V 7QH (GB)**

Courier Press, Leamington Spa, England.

**Description**

The invention concerns liquid conveying hose construction, especially for agricultural purposes.

To serve intensive agricultural plant cultivating processes several solutions for conveying liquids, primarily water of irrigation, are known.

In the early stages of development, open or closed system channel networks were constructed which included water take-off fittings and hydrants.

This expensive solution had many practical disadvantages and was followed in the course of technical development by the use of flexible pipes or hoses to convey water. However, in this case hose reels full of liquid have to be moved about which represented a very significant extra weight and energy consumption.

A further development was the trend of employing mobile irrigating and/or transporting devices in which empty pipe or hose elements were transported while the hoses full of liquid, i.e. water of irrigation, were laid on the ground so as to ensure that water loads should not have to be carried unnecessarily.

Patent literature contains several proposals to achieve this aim, wherein hoses or pipes are stored by being wound up or reeled as a sheet-like element and a closed hose or pipe is formed from the sheet-like element when required for use. Thus, for instance, such a solution is known from HU—A—165867 which took as its starting point the drawbacks of earlier solutions with a similar aim and which proposed a hose made up of hose sheet material, a jointing strip for securing the edges of the sheet together and a sealing strip for sealing the jointed hose edges, this hose being suitable primarily for irrigation purposes.

Although the basic principle of this solution is based on correct premises, nevertheless it has a number of inherent shortcomings which have prevented it from being employed in practice. Thus, for instance, the proposed solution could not assure a satisfactory closing or joining of the edges of the hose and thus was not suitable for conveying pressurized liquids.

The present invention seeks to overcome this disadvantage and aims to provide a hose construction which achieves satisfactory sealing and which is suitable, even at high internal pressures, for conveying liquids or slurries or other fluids for distances as required by the actual demand or operation; and wherein the hose is continuously formed from (and is continuously dismantleable into) elements which when assembled together take up a permanent hose shape.

Accordingly, the invention consists of a hose comprising a flexible sheet material opposite marginal edges of which are bent together in a direction inwardly of the hose to lie adjacent to each other in an overlapping, slightly spaced-apart, back-to-back relationship, a jointing strip formed with a hollow interior for receiving said edges therewithin and extending along the internal length of the hose, the jointing strip defining an opening through which said edges are passed into the said hollow interior; the said jointing strip including resilient, open reinforcing rings embedded therein, and a sealing strip extending along the external length of the hose and including a portion that extends substantially radially inwardly between the external surfaces of the said edges, characterised in that each said edge is provided with a thickened rim portion; and in that said jointing strip is provided with internal ribbing extending into the said opening for engaging the internal surfaces of said thickened rim portions, said rings in use resiliently biasing the said ribbing to press the said thickened rim portions toward each other, whereby to engage and retain said portion of said sealing strip between the external surfaces of said thickened rim portions.

Preferably, said hollow interior of the jointing strip has an elongate, narrow mouth which receives the two thickened rim portions and has an inner portion with walls that are further apart than the width of the said mouth; the mouth being formed so as to engage the said thickened rim portions when the latter are received within the said inner portion and are moved apart and against the said walls; the said portion of the hose-sealing strip being effective on its introduction into the said interior to move the two thickened rim portions apart and against the said walls of the said inner portion of the cavity, and thus to retain the two thickened rim portions within the wider inner portion by engagement of the thickened rim portions with the narrow mouth. The hose-sealing strip is preferably also a resilient body throughout the length of which a stiffening wire extends.

Preferably, the said opening of the jointing strip is formed with a radially inner edge extending substantially perpendicularly to the direction of passing the thickened rim portions into the said interior and effective to abut the rear end of the said thickened rim portions.

The advantage of the invention may be summarised in that at any given time only that length of hose is assembled and used which is actually needed at that time.

The invention is suitable not only for conveying liquids or water but any other medium which can be conveyed in a hose or tube system.

A preferred embodiment of the invention is shown, purely by way of example, in the accompanying diagrammatic drawings, wherein:

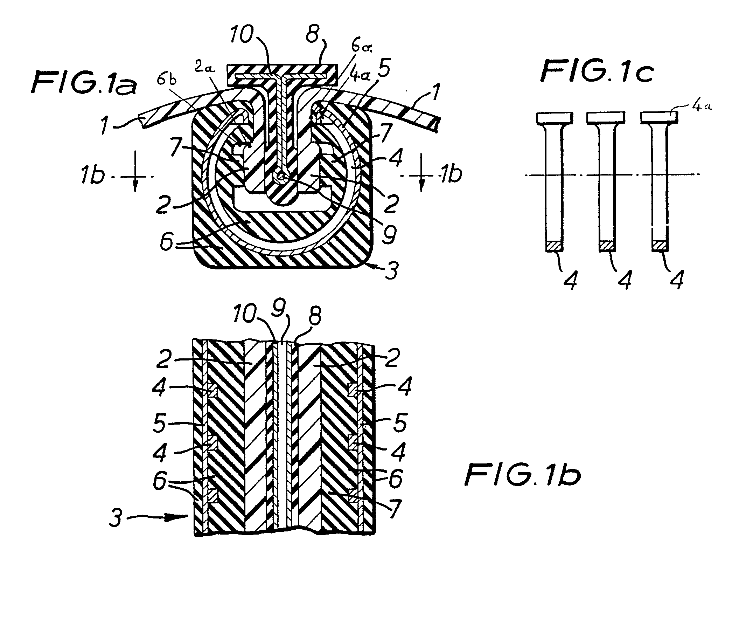

Figure 1*a* is a cross-section of the hose construction according to the invention,

Figure 1*b* is an axial section of the construction shown in Figure 1*a*,

Figure 1*c* shows, partly in section, a detail, namely a row of steel rings forming part of the construction of Figures 1*a* and 1*b*, and

Figure 2 is a diagrammatic elevational view of hose-assembling apparatus for continuously assembling a hose.

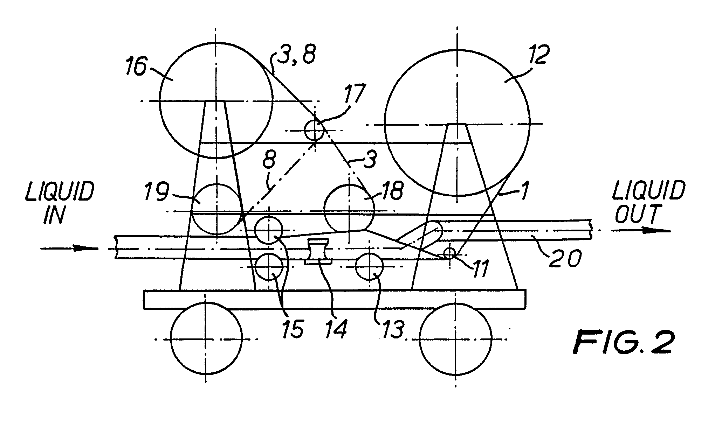

Referring first to Figure 2, the apparatus according to the invention is made up from various elements and devices mounted on a chassis or frame; these elements and devices include a drum 12 for the hose onto which is wound in strip-form the hose material 1 in an open and developed (spread-out) condition, while a drum 16 for the closing means has a hose-jointing strip 3 and hose-sealing strip 8 wound on it side-by-side. A per se known regulating means, not illustrated in the drawings, is provided for regulating the movement of the drums to ensure that their peripheral velocities are the same, i.e. that they should pay out the respective strips 1, 3 and 8 at the same rate.

A hose is formed from the hose material 1 by applying it to a short length of pipe 20. The section of the pipe 20 serving for forming or building-up the hose is slightly conical.

A guide roller 11 guides the hose material 1 onto the pipe 20. To build up the hose on the pipe 20, there are provided, successively, a pair of profiled rollers 13 for clamping the hose material, a pair of profiled rollers 14 for holding it together and rollers 15 for fastening together the edges of the material to form a hose.

The hose-jointing strip 3 and the hose-sealing strip 8 are guided and separated by a roller 17 while a roller 18 serves to apply the hose-jointing strip 3 and a closing roller 19 is provided to snap the hose-sealing strip 8 in place. The hose is formed as these elements co-operate together.

On the edges of the sheet-like hose material 1 a thickened rim or bead 2 is formed. The rear edge (relative to the radially inward movement of penetration of the rims 2 into the jointing strip 3 during assembly, as will be described below) of each rim 2 has a step-like surface or shoulder 2a. The rims 2 have the role of promoting satisfactory closing or sealing, as will be seen. Referring to Figure 1a, the beaded ends of the hose material 1 are bent, are passed radially into, and are received within, the opening of the hose-jointing strip 3. This strip 3 is of rubber or other resilient material and is essentially a rectangular cross-section member 6 having a hollow interior with a radially directed opening forming a mouth 6a to receive the beaded ends of the hose material 1. The mouth 6a has a surface which extends perpendicularly to the radially directed opening to form a shoulder 6b.

The member or block 6 contains a plurality of axially spaced apart open steel rings 4, which may optionally also be provided with a textile or fabric lining 5, embedded in it. The open ends 4a of the steel rings 4 are expediently broadened laterally and edge portions of the lining 5 are bent over them.

A pair of transversely extending opposed ribs 7 are provided on the internal surface of the interior of the hose-jointing strip 3 and extend through the rubber bedding 6; the ribs 7, biased by the springy, open steel rings 4, serve to engage the beads 2 of the hose.

The closing means includes the hose-sealing strip 8 which is of T-shaped cross-section and which is also a resilient, expediently rubber, body containing a stiffening wire 9 and reinforced with a linen insert 10.

The formation of a hose and the operation of the liquid conveying hose apparatus according to the invention are as follows:

The hose material 1 is wound on the drum 12 of the (expediently mobile) frame while the hose-jointing clamping strip 3 and the hose-sealing strip 8 are wound on the drum 16. The rotation of the two drums is so co-ordinated that the length of the hose elements paid out from them is always the same per unit time.

The hose for conveying liquids is continually formed in a direction moving away from the liquid off-take point, as follows:

The hose material 1 is unwound from the drum 12 and is passed via the guiding roller 11 to the pipe 20. The front end of the pipe 20 is conical and the formation of the hose takes place on this section by stretching the material 1 on the pipe 20 with the aid of the clamping roller pair 13, the holding roller pair 14 and the fastening rollers 15.

The material 1 is then jointed at its marginal edges and secured into a pipe by means of the jointing strip 3 running off the separating roller 17 and applied against the tube 20 by means of the application roller 18. In the thus formed aperture or opening (see Figure 1a) the beads or rims 2 of the hose are held with the aid of ribs 7 and rings 4. It will be appreciated that the shoulders 2a and 6b can interengage. Then by means of the closing roller 19 the hose-sealing strip 8 is pressed into the strip 3 between the two rims 2 such that the rims 2 of the hose are pressed against the hose-jointing strip 3. The rims 2 and the ribs 7 promote improved engagement. In this way the hose forming operation is accomplished and the finished hose slides off the pipe 20 as it is being continuously made and is laid on the ground.

The rate of formation of hose and its laying on the ground takes place as a function of the displacement of the whole apparatus. Naturally the formation of the hose can be stopped in any position. Since at any given time fully finished hoses are present on the pipe 20, the conveying of the medium takes place continuously as the hose is formed.

The dismantling of the hose may be achieved by reversing the operations and displacements described above.

An advantage of the preferred embodiment of the invention lies in that it is not necessary to move about liquid-filled hoses or hose drums, nor is it necessary to cause liquid to flow in wound-up hoses which would mean the energy-intensive displacement of large masses, but instead at any given time liquid only needs to be circulated in the actually needed length of hose. In addition, a further advantage is that for irrigational cultivation the optimal mass of the machine and of the liquid is being conveyed so that the soil is not compressed, and its structure is not affected deleteriously and thus no harmful influence on its microflora is exerted.

## Claims

1. A continuously producible and continuously dismantleable liquid-conveying hose, comprising:

a flexible sheet material (1) opposite marginal edges of which are bent together in a direction inwardly of the hose to lie adjacent to each other in an overlapping, slightly spaced-apart, back-to-back relationship, a jointing strip (3) formed with a hollow interior for receiving said edges therewithin and extending along the internal length of the hose, the jointing strip (3) defining an opening through which said edges are passed into the said hollow interior; the said jointing strip (3) including resilient, open reinforcing rings (4) embedded therein, and a sealing strip (8) extending along the external length of the hose and including a portion that extends substantially radially inwardly between the external surfaces of the said edges, characterised in that each said edge is provided with a thickened rim portion (2); and in that said jointing strip (3) is provided with internal ribbing (7) extending into the said opening for engaging the internal surfaces of said thickened rim portions (2), said rings (4) in use resiliently biasing the said ribbing (7) to press the said thickened rim portions (2) toward each other, whereby to engage and retain said portion of said sealing strip (8) between the external surfaces of said thickened rim portions (2).

2. A hose according to claim 1, characterised in that the said hollow interior of the jointing strip (3) has an elongate, narrow mouth (6a) which receives the two thickened rim portions (2) and has an inner portion with walls that are further apart than the width of the said mouth; the mouth (6a) being formed so as to engage the said thickened rim portions (2) when the latter are received within the said inner portion and are moved apart and against the said walls; the said portion of the hose-sealing strip (8) being effective on its introduction into the said interior to move the two thickened rim portions (2) apart and against the said walls of the said inner portion of the cavity, and thus to retain the two thickened rim portions (2) within the wider inner portion by engagement of the thickened rim portions (2) with the narrow mouth (6a).

3. A hose according to claim 1 or 2, characterised in that the said jointing strip (3) is a block (6) of flexible material, and the said ribbing (7) consists of a pair of opposed internal ribs projecting into the said opening for engaging the internal surfaces of said thickened rim portions (2).

4. A hose according to any preceding claim, characterised in that the said opening of the jointing strip (3) is formed with a radially inner edge (6b) extending substantially perpendicularly to the direction of passing the thickened rim portions (2) into the said interior and effective to abut the rear end (2a) of the said thickened rim portions (2).

5. A hose according to any preceding claim, characterised in that the hose-sealing strip (8) contains a wire reinforcement (9).

6. A hose according to any preceding claim, characterised in that the open ends (4a) of the said rings (4) are broadened laterally.

7. A hose according to any preceding claim, characterised in that the said jointing strip (3) is provided with a linen insert (5).

8. A hose according to any preceding claim, characterised in that the said hose-sealing strip (8) contains a linen insert (10).

## Revendications

1. Un tuyau flexible de transport de liquide réalisable de manière continue et démontable de manière continue, comprenant: un matériau souple en feuille (1) dont les bordes marginaux opposés sont courbés ensemble suivant une direction tournée vers l'intérieur du tuyau flexible pour être disposés côte à côte, dans une relation de recouvrement, légèrement espacés, dos à dos, un ruban de jonction (3) ménagé avec un intérieur creux pour y recevoir lesdits bords et s'étendant selon la longueur interne du tuyau flexible, le ruban de jonction (3) définissant une ouverture à travers laquelle lesdits bords sont introduits dans ledit intérieur creux, ledit ruban de jonction (3) comprenant des anneaux de renforcement ouverts élastiques (4) qui y sont noyés et un ruban d'étanchéité (8) s'étendant le long de la longueur extérieure du tuyau flexible et comprenant une partie qui s'étend sensiblement radialement vers l'intérieur entre les surfaces externes desdits bords, caractérisé en ce que chacun desdits bords est muni d'une partie de rebord épaissi (2) et en ce que ledit ruban de jonction (3) est muni d'un nervurage intérieur (7) s'étendant dans ladite ouverture pour être au contact des surfaces internes desdites parties de rebord épaissies (2), lesdits anneaux (4), en cours d'utilisation, repoussant de manière élastique ledit nervurage (7) pour presser lesdits rebords épaissis (2) en direction l'un de l'autre, de manière à engager et retenir ladite portion dudit ruban d'étanchéité (8) entre les surfaces externes desdits rebords épaissis (2).

2. Un tuyau flexible selon la revendication 1, caractérisé en ce que ledit intérieur creux du ruban de jonction (3) comporte une embouchure allongée étroite (6a) qui reçoit les deux rebords épaissis (2) et comporte une partie interne avec des parois qui sont plus espacées l'une de l'autre que la largeur de ladite embouchure, l'embouchure (6a) étant ménagée de manière à engager lesdites parties de rebord épaissies (2) lorsque celles-ci sont reçues dans ladite portion interne et sont écartées et plaquées contre lesdites parois, ladite portion du ruban d'étanchéité de tuyau flexible (8) étant adaptée lors de son introduction dans ledit intérieur à séparer les deux parties de rebord épaissies (2) et à les plaquer contre lesdites parois de ladite portion intérieure de la cavité et à retenir ainsi ces deux parties de rebord épaissies (2) dans la partie intérieure plus large par engagement de ces parties de rebord épaissies (2) avec l'embouchure étroite (6a).

3. Un tuyau flexible selon la revendication 1 ou 2, caractérisé en ce que ledit ruban de jonction (3) est un bloc (6) d'un matériau souple et ledit nervurage (7) consiste en une paire de nervures internes opposées faisant saillie dans ladite ouverture pour venir en contact avec les surfaces internes desdites parties de rebord épaissies (2).

4. Un tuyau flexible selon l'une quelconque des revendications précédentes, caractérisé en ce que ladite ouverture du ruban de jonction (3) est ménagée avec un bord intérieur radial (6b) s'étendant sensiblement perpendiculairement à la direction de passage des parties de rebord épaissies (2) dans ledit intérieur et agissant pour être en butée contre l'extrémité arrière (2a) desdites parties de rebord épaissies (2).

5. Un tuyau flexible selon l'une des revendications précédentes, caractérisé en ce que le ruban d'étanchéité de tuyau flexible (8) contient un câble de renforcement (9).

6. Un tuyau flexible selon l'une des revendicationss précédentes, caractérisé en ce que les extrémités ouvertes (4a) desdits anneaux (4) sont élargies latéralement.

7. Un tuyau flexible selon l'une des revendications précédentes, caractérisé en ce que ledit ruban de jonction (3) comporte un insert textile (5).

8. Un tuyau flexible selon l'une des revendications précédentes, caractérisé en ce que le ruban d'étanchéité (8) contient un insert textile (10).

**Patentansprüche**

1. Kontinuierlich herstellbares und kontinuierlich demontierbares Flüssigkeitstransportrohr mit einem flexiblen, plattenförmigen Material (1), dessen gegenüberliegende Seitenkanten in Richtung des Inneren des Rohres zusammengebogen sind und in einer überlappenden, geringfügig voneinander abgesetzten Rücken-an-Rücken-Beziehung benachbart zueinander liegen, einem Verbindungsband (3), das mit einem hohlen Innenraum zur Aufnahme der Kanten ausgebildet ist und sich an der Rohrinnenseite längs des Rohres erstreckt, wobei das Verbindungsband (3) eine Öffnung ausbildet, durch die die Kanten in den hohlen Innenraum eingeführt sind und elastische, offene Verstärkungsringe aufweist, die im Verbindungsband (3) eingebettet sind, und einem Abdichtband (8), das sich an der Rohraußenseite längs des Rohres erstreckt und einen Teil aufweist, der sich im wesentlichen radial nach innen zwischen die Außenflächen der Kanten erstreckt, dadurch gekennzeichnet, daß jede Kante mit einem verdickten Randteil (2) versehen ist und daß das Verbindungsband (3) eine Innenverrippung (7) aufweist, die sich in die Öffnung erstreckt und mit den Innenflächen der verdickten Randteile (2) in Eingriff steht, wobei die Ringe (4) während des Gebrauchs die Verrippung (7) elastisch vorspannen und die verdickten Randteile (2) aufeinander zu drücken, um dadurch den Teil des Abdichtbandes (8) mit den Außenflächen der verdickten Randteile (2) in Eingriff zu bringen und diesen zwischen den Außenflächen der verdickten Randteile (2) zu halten.

2. Rohr nach Anspruch 1, dadurch gekennzeichnet, daß der hohle Innenraum des Verbindungsbands (3) eine gestreckte, enge Mündung (6a), die die beiden verdickten Randteile (2) aufnimmt, sowie einen Innenteil mit Wänden aufweist, die weiter voneinander abgesetzt sind als die Breite der Mündung, wobei die Mündung (6a) so ausgebildet ist, daß sie mit den verdickten Randteilen (2) in Eingriff steht, sobald die letztgenannten in dem Innenteil aufgenommen sind und voneinander weg gegen die Wände bewegt werden und wobei der Teil des Rohrabdichtbandes (8) bei seiner Einführung in das Innere bewirkt, daß die beiden verdickten Randteile (2) auseinander und gegen die Wände des Innenteils des Hohlraumes bewegt werden, um somit die beiden verdickten Randteile (2) in dem breiteren Innenteil durch Eingriff der verdickten Randteile (2) mit der engen Mündung (6a) zu halten.

3. Rohr nach Anspruch 1 oder 2, dadurch gekennzeichnet, daß das Verbindungsband (3) ein Block (6) aus elastischem Material ist und die Verrippung (7) aus einem Paar von sich gegenüberliegenden Innenrippen besteht, die in die Öffnung zum Eingriff mit den Innenflächen der verdickten Randteile (2) vorstehen.

4. Rohr nach einem der vorstehenden Ansprüche, dadurch gekennzeichnet, daß die Öffnung des Verbindungsbandes (3) mit einer radial inneren Kante (6b) ausgebildet ist, die sich im wesentlichen senkrecht zur Bewegungsrichtung der verdickten Randteile (2) in das Innere erstreckt und als Widerlager für das rückseitige Ende (2a) der verdickten Randteile (2) wirkt.

5. Rohr nach einem der vorstehenden Ansprüche, dadurch gekennzeichnet, daß das Rohrabdichtband (8) eine Drahtversteifung (9) enthält.

6. Rohr nach einem der vorstehenden Ansprüche, dadurch gekennzeichnet, daß die offenen Enden (4a) der Ringe (4) seitlich verbreitert sind.

7. Rohr nach einem der vorstehenden Ansprüche, dadurch gekennzeichnet, daß das Verbindungsband (3) mit einem Leineneinsatz (5) versehen ist.

8. Rohr nach einem der vorstehenden Ansprüche, dadurch gekennzeichnet, daß das Rohrabdichtband (8) einen Leineneinsatz (10) enthält.

FIG.1a

FIG.1c

FIG.1b

FIG. 2